## Europäisches Patentamt
## European Patent Office
## Office européen des brevets

(19)

(11) Numéro de publication: **0 044 773**
**B1**

(12)

# FASCICULE DE BREVET EUROPEEN

(45) Date de publication du fascicule du brevet:
13.11.85

(51) Int. Cl.⁴: **B 60 L 11/18**, B 62 D 11/04, H 02 P 7/74

(21) Numéro de dépôt: 81401119.3

(22) Date de dépôt: 10.07.81

(54) Véhicule terrestre à commande électronique.

(30) Priorité: 18.07.80 FR 8015870

(43) Date de publication de la demande:
27.01.82 Bulletin 82/4

(45) Mention de la délivrance du brevet:
13.11.85 Bulletin 85/46

(84) Etats contractants désignés:
BE DE FR GB IT

(56) Documents cités:
FR - A - 2 084 268
FR - A - 2 325 533
GB - A - 1 209 245
GB - A - 1 240 979
US - A - 3 688 169
US - A - 3 848 166
US - A - 3 970 160
US - A - 4 196 785

(73) Titulaire: **Jarret, Jean, 133 Avenue Maréchal Foch,
F-78130 LES MUREAUX (FR)**
Titulaire: **Jarret, Jacques, 133 Avenue Maréchal Foch,
F-78130 LES MUREAUX (FR)**

(72) Inventeur: **Jarret, Jean, 133 Avenue Maréchal Foch,
F-78130 LES MUREAUX (FR)**
Inventeur: **Jarret, Jacques, 133 Avenue Maréchal Foch,
F-78130 LES MUREAUX (FR)**

(74) Mandataire: **Bouju, André et al, 38 Avenue de la Grande
Armée, F-75017 Paris (FR)**

BUNDESDRUCKEREI BERLIN

## Description

La présente invention concerne un véhicule terrestre à commande électronique, comportant au moins une paire de roues latérales entraînées par des moteurs électriques respectifs, des moyens pour communiquer à chacune des roues de cette paire une action motrice propre, une source d'énergie électrique, et un calculateur relié d'une part à un organe de pilotage accessible au conducteur pour lui permettre de commander la trajectoire et la vitesse et d'autre part à des organes de commande des moteurs respectifs des roues.

Un tel véhicule est connu du US-A-3 970 160.

Ce véhicule comprend au moins trois organes de pilotage, à savoir une pédale dite d'accélérateur, un volant de direction et un levier permettant de choisir entre quatre régimes de fonctionnement, marche avant, marche arrière, demi-tour sur place dans un sens, demi-tour sur place dans l'autre sens.

Lorsqu'on place le levier en position marche avant ou marche arrière, la position de la pédale d'accélérateur est censée définir la vitesse d'avancement.

Pour cela, la pédale d'accélérateur est reliée à un transducteur qui délivre en sortie une fréquence proportionnelle à la position de la pédale d'accélérateur.

Le volant est raccordé à une paire de transducteurs qui donnent en sortie deux fréquences qui varient de façon différentielle en proportion de la position du volant 111 (colonne 3, lignes 5 à 10).

Ces fréquences définies de façon stricte par la position de la pédale et celle du volant sont chacune envoyées au moteur synchrone de l'une respective des roues latérales.

En d'autes termes, en actionnant le volant et la pédale d'accélérateur, le conducteur définit directement la fréquence électrique envoyée à chaque moteur synchrone.

Un tel système est très mal adapté à l'automobile. En effet, le conducteur peut à tout moment commander des variations de fréquence très brutales, par exemple en enfonçant brutalement la pédale dite »d'accélérateur« (il s'agit en réalité d'une pédale de vitesse). Dans un tel cas, de toute évidence, les moteurs synchrones ne peuvent pas suivre la fréquence qui leur est fournie. Pour éviter cette situation, le pilote doit donc s'astreindre à ne déplacer la pédale d'accélérateur que d'une façon suffisamment lente pour que les moteurs puissent suivre la variation de fréquence.

De même, un mouvement brusque du volant entraîne une brusque variation des fréquences envoyées aux roues et les moteurs ne peuvent pas suivre ce mouvement et assurer à eux seuls la direction du véhicule. Le système connu ne permet pas à lui seul de diriger le véhicule. Si rien d'autre n'était prévu, en cas de mouvement réflexe du conducteur sur le volant, il est certain que les moteurs déchrocheraient et le véhicule continuerait tout droit. C'est pourquoi le véhicule connu comporte en outre une roue arrière orientable par liaison mécanique avec le volant de direction. Finalement, la variation différentielle de la fréquence envoyée aux roues n'est qu'une aide à l'effet directeur principalement assuré par la roue directrice.

D'autre part, la commande de vitesse et de direction n'est pas possible à très basse vitesse. En effet, le rapport de division de la fréquence de base, lequel détermine la vitesse du véhicule varie entre 1/225 et 1/2, c'est-à-dire que si la vitesse maximale est de 112 km/h, le véhicule n'est pas contrôlable en-dessous de 1 km/h, ce qui est un problème pour les manœuvres de parking.

Le but de l'invention est ainsi de proposer un véhicule capable de suivre une trajectoire bien déterminée, à toutes les vitesses tout en exigeant du conducteur une action de pilotage compatible avec les exigences de la circulation et notamment permettant les mouvements réflexes.

Suivant l'invention, le véhicule est caractérisé en ce que le calculateur est numérique et associé à une horloge de référence et se trouve en outre relié à des détecteurs des positions relatives des parties fixe et mobile des roues motrices, en ce que le calculateur est adapté à interpréter les informations provenant de l'organe de pilotage en tant que consignes d'accélération de chaque roue de la paire de roues latérales, et en ce que le calculateur est adapté à déterminer en fonction des consignes précitées d'une part et des positions relatives précitées d'autre part la quantité d'énergie à fournir à chaque roue en vue de l'exécution des consignes.

Dans le véhicule selon l'invention, le conducteur ne commande pas l'avancement du véhicule en donnant une instruction de couple (cas des véhicules classiques actuels) ni en donnant des instructions de vitesse (cas du document antérieur analysé plus haut), mais en donnant des instructions d'accélération pour chacune des deux roues motrices.

Ces instructions sont utilisées comme consignes dans un asservissement qui détermine l'énergie nécessaire à chaque roue pour réaliser la consigne.

On connaît certes d'après les US-A-3 848 166 et 3 688 169, et le GB-A-1 240 979 des moteurs sans balais dans lesquels on détecte la position angulaire relative des parties fixe et mobile du moteur et on commute le courant de puissance en fonction de cette détection. De plus, si l'on désire faire varier la puissance du moteur, on peut régler le déclenchement de chaque alternance par rapport à la position relative des parties fixe et mobile du moteur. Ainsi, selon ces trois documents, on détecte la position angulaire du rotor et on commande le déclenchement des alternances en fonction de la position angulaire détectée.

En particulier les lignes 37 à 49 à la page 3 du GB-A-1 240 979 précisent bien que l'utilisateur d'un tel moteur donne des instructions de couple et en fonction de ces instructions l'électronique avance ou retarde plus ou moins le déclenchement des alternances, ou passe d'un mode de fonctionnement à un autre pour des questions de rendement.

Ceci n'assure aucun asservissement de l'accélération de la charge et par conséquent n'a rien à voir avec la particularité revendiquée.

Dans les documents cités la position relative des parties fixe et mobile peut, à chaque instant, être quelconque, car on se contente de la détecter pour assurer une synchronisation plus ou moins complexe entre courant et position du rotor. Ceci fait partie du fonctionnement interne du moteur.

Selon l'invention, la position relative des parties fixe et mobile des roues doit suivre une loi temporelle imposée par le pilote.

La détection prévue selon l'invention concerne non la synchronisation interne du moteur, mais l'acquisition par l'ordinateur d'une information permettant à ce dernier de déterminer la puissance à demander au moteur.

Suivant une réalisation avantageuse de l'invention, les moteurs des roues sont des moteurs à réluctance variable comportant chacun un rotor dentelé coopérant avec un stator à dents munies de bobinages reliés à une source d'énergie électrique par l'intermédiaire d'organes de commutation reliés au bloc de programmation pour envoyer aux bobinages des impulsions d'intensité et de durée déterminées par le calculateur.

Pour déterminer l'intensité, le véhicule comprend un scrutateur de l'intensité de chaque impulsion délivrée au moteur, et ce scrutateur est relié à un étage de comparaison avec une valeur de consigne de l'intensité élaborée par le calculateur.

La consigne d'intensité est élaborée par le calculateur en fonction de la vitesse réelle mesurée et de la vitesse souhaitée. Le calculateur, en fonction de la comparaison des intensités, module le hachage des impulsions pour rendre l'intensité réelle égale à l'intensité de consigne.

Pour la comparaison des vitesses, les détecteurs de position relative des parties fixe et mobile de chaque roue sont reliés au calculateur qui détermine l'écart de phase entre une position de référence du moteur et le début de l'impulsion électrique dans les bobinages.

Le calculateur ajuste cet écart de phase pour définir une marche lente ou rapide, ou un freinage adapté à une vitesse lente ou à une vitesse rapide.

D'autres particularités et avantages de l'invention ressortiront encore de la description détaillée qui va suivre.

Aux dessins annexés, donnés à titre d'exemple non limitatif:

la figure 1 est une vue schématique en perspective éclatée d'un véhicule conforme à l'invention;

la figure 2 est une vue latérale d'une roue, avec coupe partielle, suivant II-II de la figure 1;

la figure 3 est une vue en coupe suivant III-III de la figure 2;

la figure 4 est un schéma des liaisons électriques du véhicule;

la figure 5 est une vue en coupe de l'organe de commande suivant V-V de la figure 1;

la figure 6 est une représentation schématique d'une impulsion électrique;

la figure 7 est un schéma temporel des impulsions destiné à expliquer le fonctionnement de l'invention.

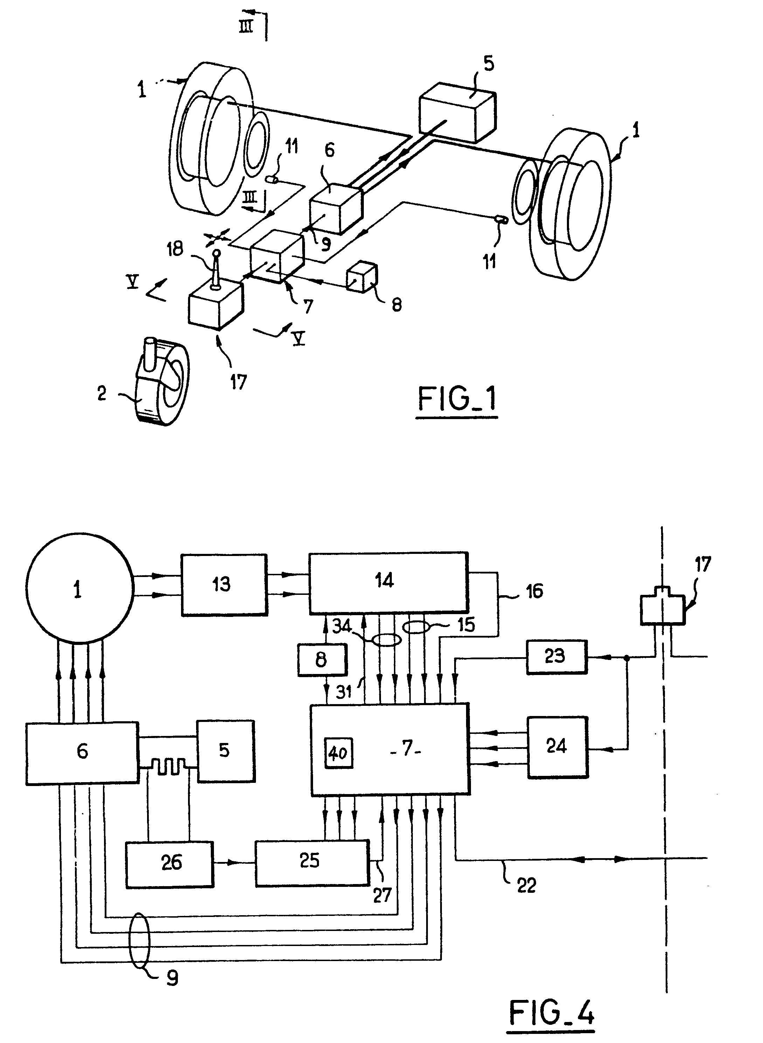

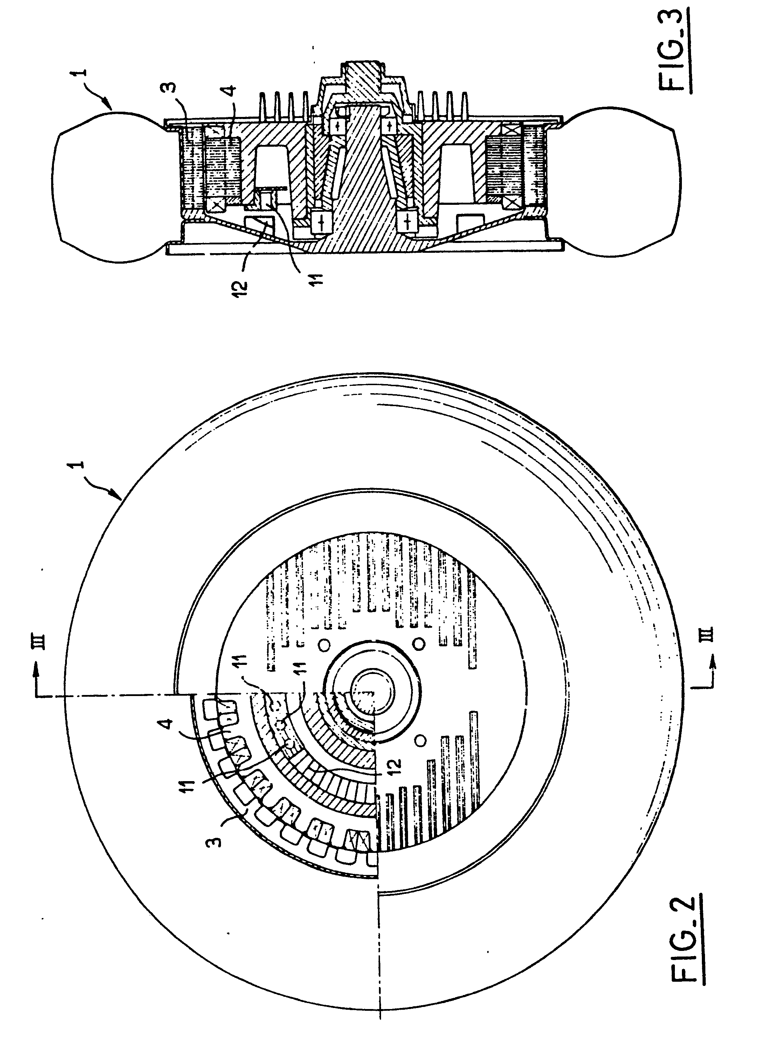

En référence à la figure 1, un véhicule est proté par une paire de roues motrices 1 et une roue tricycle orientable 2. Les roues 1 sont motrices et comprennent chacune un rotor dentelé 3 coopérant avec un stator 4 solidaire du véhicule (figure 2) et muni de bobinages pour constituer un moteur synchrone à réluctance variable. Le nombre de commutations statoriques par tour de roue est relativement élevé, soit de quelques dizaines à plusieurs centaines.

Les enroulements du stator 4 sont reliés à une batterie 5 par l'intermédiaire d'un commutateur 6 qui, dans l'exemple décrit, est constitué par des thyristors commandés à partir d'un bloc de programmation on calculateur 7 associé à une horloge 8 par l'intermédiaire de lignes 9.

Les roues 1 sont encore munies d'organes de détection constitués par un certain nombre de cellules photo-électriques 11 fixés au stator et coopérant avec des dents 12 pratiquées sur le rotor (figures 2 et 3), pour détecter les positions relatives du stator et du rotor.

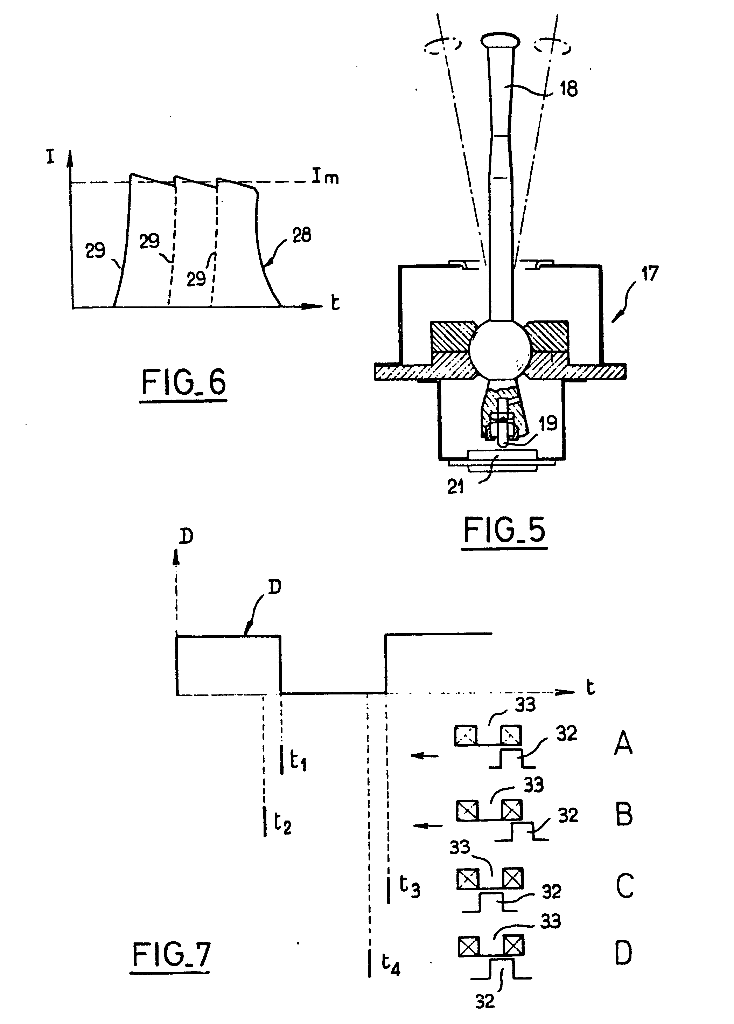

Ces cellules sont reliées, par l'intermédiaire d'un étage de remise en forme 13 (figure 4), à un étage 14 de détection qui mesure la durée entre les impulsions émises par les cellules et qui détecte également le sens de rotation de la roue 1, grâce au fait que le nombre de cellules est supérieur à un.

Ces informations de durée et de sens sont transmises au bloc 7 sous forme numérique respectivement par des lignes 15 et 16.

Un organe de commande 17 (figures 1 et 5) comprend un levier 18 inclinable dans toutes les directions, et dont l'extrémité porte une lampe 19 disposée pour éclairer un groupe 21 de cellules photo-électriques. On comprend que, suivant la direction de l'inclinaison donnée au levier 18 (avant, arrière, gauche, droite), fet suivant l'angle d'inclinaison, l'éclairement différentiel des cellules sera modifié, et que le signal résultant définira à la fois un sens de marche et une accélération, le signal de direction du véhicule correspondant à des consignes d'accélération différentes envoyées respectivement vers le bloc 7 et vers un bloc analogue (non représenté) relié à l'autre roue suivant un schéma analogue à celui de la figure 4. Une liaison 22 entre ces deux blocs leur permet d'échanger leurs informations, leur ensemble constituant un calculateur.

L'information de sens de marche parvient au bloc 7 par l'intermédiaire d'un étage de détection 23, tandis que l'information d'accélération passe par un convertisseur analogique-numérique 24.

A partir de ces informations, le bloc 7 élabore une valeur de consigne d'intensité électrique des impulsions fournies au stator et applique cette valeur à un étage de comparaison 25 qui la compare à l'intensité réelle mesurée par un scrutateur 26.

Une liaison 27 permet de communiquer l'information relative au résultat de cette comparaison au bloc 7. Suivant le sens de ces résultats, le bloc 7 modifie, par les lignes 9, le mode de fonctionnement des thyristors. On comprend en effet que l'intensité moyenne Im (figure 6) au cours d'une impulsion 28 dépend de l'instant des allumages 29 des thyristors au cours de cette impulsion.

Les informations relatives aux instants d'allumage des thyristors sont communiquées à l'étage de détection 14 par une liaison 31, ce qui permet à l'étage 14 de déterminer l'écart de phase entre le début d'une impulsion 28 et l'instant où la roue passe par une position de référence, cet instant étant défini par une des cellules photo-électriques 11.

Plus précisément, le signal D en créneau émis par le cellule (figure 7) est tel que son flanc montant se produise quand une dent 32 du rotor passe exactement devant une dent 33 du stator (figure 7-C).

L'information d'écart de phase ainsi élaborée est transmise au bloc 7 par une liaison 34. En fonction des consignes reçues à partir de l'organe de commande 17, le bloc 7 modifie l'écart de phase pour respecter cette consigne.

Par exemple, en marche avant lente, l'impulsion est envoyée à l'instant $t_1$, au moment où la dent 32 du rotor entre dans la zone d'attraction du stator (position A). A vitesse rapide, on donne une certaine avance à l'allumage (position B) en allumant à l'instant $t_2$.

Le freinage à vitesse lente s'obtient en allumant à l'instant $t_3$ quand la dent 32 est en position C, de manière qu'elle soit retenue par l'attraction de la dent 33 du stator. A vitesse rapide, on freinera en allumant à l'instant $t_4$, avec une certaine avance (position D).

En pratique, ces avances sont réalisées sous forme de retard par rapport au flanc montant du signal D, par exemple au moyen de monostables.

Le bloc 7 comprend encore une mémoire 40 à contenu modifiable où sont rangées un certain nombre de consignes permanentes, notamment de sécurité, telles que des limites de vitesse, ou un rayon de courbure limite de trajectoire fonction de la vitesse.

En fonctionnement, le pilote donne une consigne de modification de vitesse et de trajectoire au moyen de l'organe de commande 17, puis il replace cet organe en position neutre. A partir de cet instant, le bloc 7 et celui relatif à l'autre roue feront respecter ces consignes malgré des aléas du trajet sans intervention du pilote.

Par exemple, si la pente de la route change, le calculateur modifiera la puissance transmise aux roues dès qu'il constatera une tendance à une variation de la vitesse. Il en va de même pour la trajectoire. Si la consigne correspond à une ligne droite, toute amorce de déviation causée par exemple par une inégalité du sol se traduira par une vitesse inégale des roues 1. Cette différence de vitesse constatée par le calculateur provoquera une accélération différentielle des roues qui tendra à rétablir instantanément la trajectoire rectiligne.

Le rôle du pilote se borne uniquement à modifier les valeurs de consigne quand il le désire.

Dans le cas d'une trajectoire en courbe, le fait d'incliner le levier 18 provoque une accélération différentielle des roues avec pour effet de provoquer une trajectoire à courbure croissante tant que le levier reste incliné. Une fois le levier replacé en position neutre, le rayon de courbure de la trajectoire demeure constant. Pour revenir à la trajectoire rectiligne, il faut incliner le levier dans l'autre sens pour donner aux roues une accélération différentielle en sens inverse tendant à diminuer la courbure.

Dans une variante de réalisation, l'organe de commande 17 peut être constitué par une poignée immobile sensible à la pression exercée, par l'intermédiaire de jauges de contrainte.

## Revendications

1. Véhicule terrestre à commande électronique, comportant au moins une paire de roues latérales (1) entraînées par des moteurs électriques respectifs (3, 4), des moyens pour communiquer à chacune des roues de cette paire une action motrice propre, une source (5) d'énergie électrique, et un calculateur (7) relié d'une part à un organe de pilotage (17) accessible au conducteur pour lui permettre de commander la trajectoire et la vitesse et d'autre part à des organes de commande des moteurs respectifs des roues caractérisé en ce que le calculateur (7) est numérique et associé à une horloge de référence (8) et se trouve en outre relié à des détecteurs (11, 12, 13, 14) des positions relatives des parties fixe (4) et mobile (3) des roues motrices (1), en ce que le calculateur (7) est adapté à interpréter les informations provenant de l'organe de pilotage (17) en tant que consignes d'accélération de chaque roue de la paire de roues latérales (1), et en ce que le calculateur est adapté à déterminer en fonction des consignes précitées d'une part et des positions relatives précitées d'autre part la quantité d'énergie à fournir à chaque roue (1) en vue de l'exécution des consignes.

2. Véhicule conforme à la revendication 1, caractérisé en ce que les moteurs des roues sont des moteurs à réluctance variable comportant chacun un rotor denté (3) coopérant avec un stator (4) à dents munies de bobinages reliés à une source d'énergie électrique par l'intermédiaire d'organes de commutation (6) reliés au

bloc de programmation (7) pour envoyer aux bobinages des impulsions d'intensité et de durée déterminée par le calculateur.

3. Véhicule conforme à la revendication 1 ou 2, caractérisé en ce qu'il comprend un scrutateur (26) de l'intensité de chaque impulsion (28) délivrée au moteur, ce scrutateur étant relié à un étage de comparaison (25) avec une valeur de consigne de l'intensité élaborée par le calculateur (7).

4. Véhicule conforme à l'une des revendications 1 ou 3, caractérisé en ce que les détecteurs de position relative des parties fixe et mobile de chaque roue sont reliés au calculateur (7) qui détermine l'écart de phase entre une position de référence du moteur et le début de l'impulsion électrique dans les bobinages.

5. Véhicule conforme à la revendication 4, caractérisé en ce que le détecteur de position relative d'une roue comprend un certain nombre de cellules photo-électriques (11) fixées au stator (4) et coopérant avec des dents (12) du rotor (3).

**Patentansprüche**

1. Bodenfahrzeug mit elektronischer Steuerung und versehen mit wenigstens einem Paar von seitlichen Rädern (1), die durch entsprechende elektrische Motoren (3, 4) angetrieben werden, Mitteln, um jedem Rad dieses Paares eine eigene Antriebswirkung aufzuprägen, einer elektrischen Energiequelle (5) und mit einem Rechner (7), der einerseits an ein Steuerorgan (17) angeschlossen ist, welches für den Fahrer zugänglich ist, damit dieser die Bahn und die Geschwindigkeit steuern kann, und andererseits verbunden ist mit Steuerorganen für die jeweiligen Motoren der Räder, dadurch gekennzeichnet, daß der digital ausgebildete Rechner (7) einer Referenzzeitbasis (8) zugeordnet ist und ferner mit Detektoren (11, 12, 13, 14) für die Relativstellungen der feststehenden (4) und beweglichen (3) Teile der Antriebsräder (1) verbunden ist, daß der Rechner (7) geeignet ist, um die von dem Steuerorgan (17) herrührenden Informationen als Beschleunigungs-Sollwerte für jedes Rad des Paares von seitlichen Rädern (1) zu interpretieren, und daß jeder Rechner geeignet ist, um in Abhängigkeit von den genannten Sollwerten einerseits und den genannten Relativstellungen andererseits die Energiemenge zu bestimmen, die jedem Rad (1) zugeführt werden muß, um den Sollwerten zu folgen.

2. Fahrzeug nach Anspruch 1, dadurch gekennzeichnet, daß die Motoren der Räder Motoren mit variabler Reluktanz sind, die jeweils einen gezahnten Rotor (3) aufweisen, welcher mit einem Stator (4) zusammenwirkt, der Zähne aufweist, welche mit Wicklungen versehen sind, die an eine elektrische Energiequelle über Schaltorgane (6) angeschlossen sind, welche mit dem Programmierblock (7) verbunden sind, um den Wicklungen Impulse zuzuführen, deren Intensität und Dauer durch den Rechner bestimmt wird.

3. Fahrzeug nach Anspruch 1 oder 2, dadurch gekennzeichnet, daß es einen Fühler (26) für die Intensität jedes an den Motor abgegebenen Impulses (28) umfaßt, wobei dieser Fühler mit einer Komparatorstufe (25) verbunden ist, die mit einem Intensitäts-Sollwert vergleicht, welcher durch den Rechner (7) erzeugt wird.

4. Fahrzeug nach Anspruch 2 oder 3, dadurch gekennzeichnet, daß die Detektoren für die Relativposition zwischen feststehendem und beweglichem Teil jedes Rades mit dem Rechner (7) verbunden sind, welcher die Phasenabweichung zwischen einer Referenzstellung des Motors und dem Beginn des elektrischen Impulses in den Wicklungen bestimmt.

5. Fahrzeug nach Anspruch 4, dadurch gekennzeichnet, daß der Detektor für die Relativposition eines Rades eine bestimmte Anzahl von fotoelektrischen Zellen (11) umfaßt, die an dem Stator (4) befestigt sind und mit Zähnen (12) des Rotors (3) zusammenwirken.

**Claims**

1. An electronically controlled land vehicle comprising at least one pair of side wheels (1) driven by respective electric motors (3, 4), means for imparting an individual driving action to each wheel of said pair, a source (5) of electrical energy, and a computer (7) connected on the one hand to a control member (17) arranged within reach of the driver so as to allow him to control course and speed, and on the other hand to control elements of the respective motors of the wheels, characterized in that the computer (7) is digital and associated with a reference clock (8) and is connected to devices (11, 12, 13, 14) for detecting the relative positions of the stationary (4) and moving (3) portions of the driving wheels (1), in that the computer (7) is adapted to use the informations coming from the control member (17) as acceleration instructions for each wheel of said pair of side wheels (1), and in that the computer is adapted to determine as a function of said instructions on the one hand and of said relative positions on the other hand the quantity of energy which needs be supplied to each wheel (1) for ensuring compliance with the instructions.

2. A vehicle according to claim 1, characterized in that the wheel motors are variable-reluctance motors each having a toothed rotor in cooperating relation with a stator (4) provided with teeth fitted with windings connected to a source of electrical energy via switching elements (6) connected to the programming unit (7) for transmitting to said windings pulses having an intensity and a duration determined by the computer.

3. A vehicle according to claim 1 or 2, characterized in that said vehicle comprises a scanner (26) for determining the intensity of each pulse (28) delivered to the motor, said scanner being connected to a stage (25) for making a comparison with a reference value of the intensity produced by the computer (7).

4. A vehicle according to claim 2 or 3, characterized in that the devices for detecting the relative positions of the stationary and moving portions of each wheel are connected to the computer (7) which determines the phase difference between a reference position of the motor and the start of the electrical pulse within the windings.

5. A vehicle according to claim 5, wherein the device for detecting the relative positions of a wheel comprises a predetermined number of photoelectric celles (11) attached to the stator (4) and adapted to cooperate with teeth (12) of the rotor (3).

FIG_1

FIG_4

FIG.2

FIG.3

0 044 773

FIG_6

FIG_5

FIG_7